# EUROPEAN PATENT SPECIFICATION

(11) **EP 2 996 939 B1**
(45) Date of publication and mention of the grant of the patent: **11.03.2020**
(21) Application number: 13884848.6
(22) Date of filing: 14.05.2013
(51) Int. Cl.: B64C 21/10, B64D 15/00, C23F 17/00, B05D 3/00, B05D 5/08, B05D 7/14, C09G 1/08, C25D 11/04, C25D 11/26, C25D 11/24, C25D 11/02, C25D 11/16

(54) **AIRCRAFT POROUS METAL SURFACE FILLED WITH WAX AND METHOD IN PRODUCTION LINE**
WACHSGEFÜLLTE PORÖSE METALLOBERFLÄCHE FÜR EIN FLUGZEUG UND VERFAHREN IN EINER PRODUKTIONSANLAGE
SURFACE MÉTALLIQUE POREUSE D'AÉRONEF REMPLIE DE CIRE ET PROCÉDÉ DANS LIGNE DE PRODUCTION

(43) Date of publication of application: 23.03.2016
(73) Proprietor: SAAB AB, 581 88 Linköping (SE)
(72) Inventor: NORMAN, Peter, S-589 35 Linköping (SE)
(74) Representative: Zacco Sweden AB
(86) International application number: PCT/SE2013/050538
(87) International publication number: WO 2014/185835

(56) References cited:
- EP-A2- 0 213 331
- EP-A2- 1 780 313
- WO-A1-01/94034
- WO-A2-2013/005113
- CA-A1- 2 293 866
- DE-A1- 10 226 737
- FR-A1- 2 789 334
- GB-A- 388 787
- GB-A- 1 223 094
- GB-A- 1 223 094
- US-A- 3 418 219
- US-A- 3 574 071
- US-A- 4 518 468
- US-A- 4 661 170
- US-A1- 2003 185 990
- US-A1- 2006 147 634
- US-A1- 2008 128 560
- US-A1- 2010 028 615

## Description

### TECHNICAL FIELD

The present invention relates to a method for manufacture of an aerial article comprising an outer surface serving as an aerodynamic surface during use of the article.

The invention relates to the aircraft industry and to aircraft service engineering. The invention is not limited thereto, but could also be related to activities regarding maintenance of commercial aircraft as well.

### BACKGROUND ART

Current aerodynamic technologies for aircraft wings, vertical/horizontal stabilizers etc., comprising aerial sheet metal articles, such as wing skins of aluminium, use different types of paints for achieving a smooth and erosion resistant aerodynamic surface. The paint cover may comprise plastic (such as PTFE) for reaching high performance.

However, such airframes, wings, leading edges, etc. are lack of sufficient and effective erosion protection functionality that supports laminar airflow. This will result in turbulent airflow over the airfoil increasing the fuel consumption of the aircraft. The above-mentioned paint is of high weight and is costly to use.

Tapes or metal foils/ coatings are in some cases adhered onto the airfoil aerodynamic surfaces. A problem with such solutions is that moisture trapped within the sheet metal after some time causes corrosion or freezing damage to the substructure.

Airfoils or aerial sheet metal articles made of aluminium per se are nearly resistant against rain erosion. Eventual rain erosion damages the aerodynamic surface of the aerial article so that turbulent airflow over the aerodynamic surface may occur, which increases the fuel consumption of the aircraft.

US 2006/0147634 discloses a method for providing a super hydrophobic surface on a structure, for example an aircraft wing, having a plurality of nano-tube structures that provides a rough surface having sharp points and valleys on which a hydrophobic compound is deposited.

US 5 496 413 discloses a method for cleaning and waxing exterior aircraft surfaces wherein a cleaning and waxing preparation is applied to the aircraft surface.

GB 1 223 094 discloses the application of wax layer over aircraft wings in order to close the pores of the material so that during flight the aircraft offers less air resistance which results in improved aerodynamic performances. By using a specific solvent the application of wax to the surface lasts for a long time due to improved adherence.

GB 388787A discloses a method of treatment of aluminium oxide layers providing porosity, whereby wax is taken up by the oxide layer of the aluminium, and discloses that the oxidized aluminium is heated in e.g. alkali solutions, which soften the coating and make it flexible. US 3418219 reveals an anodized metal and a coloring impregnating solution is applied to the anodized surface. Subsequently, the surface is treated with wax for cleaning and sealing the surface.

US 4 518 468 shows a method of treating a structure to form a dielectric surface layer of an electrostatic printer apparatus with anodized aluminium structures having a surface adapted to receive a desired pattern of charge electricity. Dielectric wax is impregnated in the anodized structure, which is heated for providing an essentially moisture free state. EP 0 213 331 discloses an aluminium structure having a surface to be anodized and a method to anodize an aluminium structure.

The object of the present invention is to provide an effective way to apply wax to an airfoil surface.
An object is to improve the resistance against erosion of an outer aircraft surface of an aerial article, at the same time as the durability is high and at low cost.

An object is to provide an aerial article that is cost-effective to use and produce, which aerial article having a low service cost for maintaining the erosion protection.

An object is to provide an aerial article, which can be used under extreme conditions for meeting weather hazards such as rain erosion, still providing a low fuel consumption of the aircraft.

An objective is to provide an aerial article, which comprises an erosion protective coating saving weight and fuel at the same time as it provides corrosion protection.

An object is to provide a method for application of an erosion resistant coating comprising a hydrophobic material to a blank of sheet metal for manufacture of the aerial article.

An object is to provide a method for application of an erosion resistant coating comprising a hydrophobic material to a blank of sheet metal for manufacture of the aerial article and a computer program for performing such method.

An object is to provide software (data medium storing program) that, when it is executed on a computer together with a production line data system or included in it, enables an automatic or semi-automatic execution of the various stages of the aforementioned method.

An object is to save energy in aircraft for removing ice. Today aircraft use large amount of energy to remove ice built up on leading edges. There is thus an object to reduce the electro-mechanical energy being used to remove ice. Such energy saving promotes the overall consumption of fuel in aircraft.

The foregoing and other objects and advantages of the present invention will be apparent to those skilled in the art, in view of the following detailed description, taken in conjunction with the appended claims and the accompanying drawings.

### SUMMARY OF THE INVENTION

This has been achieved by the method defined by the features of claim 1.

Thereby is achieved a cost-effective production of an aerial article having an erosion resistant coating at the same time as the method provides a smooth aerodynamic surface of the aerial article.

In such way is achieved a method which is cost-efficient to perform in a work-shop.

In such way is achieved a method that with minimal cost can be used for providing an anti-/deicing surface of an aerial article of an aerial vehicle, such as a fixed wing aircraft. Thereby is achieved a cost-effective method that provides corrosion protection protecting the metal skin (sheet) of the aircraft outer surface.

Suitably, the method also comprises the step of, before providing the porous outer layer, blasting the surface to be treated.

Thereby is achieved that a treatment of the sheet metal surface, which treatment comprising anodizing, can be made in a very exact manner from pre-determined parameters set in a production line.

Preferably, the method also comprises the step of, before providing the porous outer layer, pickling the surface to be treated.

The method also comprises the step of, before applying the hydrophobic material into said porous outer layer, pre-heating the sheet metal so that the outer layer is warmer than the hydrophobic material.

The step of providing the porous outer layer of said sheet metal is performed by anodizing.

Suitably, the method also comprises the step of repairing the surface according to the invention by application of said hydrophobic material onto the aerodynamic surface of the aircraft in specific aeras, where eventual damage has been detected.

In such way is achieved that a cost-efficient method is provided for making a long-life article resistant to corrosion and having a smooth outer surface promoting laminar flow, which article also over long time is protected from erosion, whereby the method provides a skin surface which is of low weight. This is extremely important for an aerial vehicle.

Thereby is also achieved a uncomplicated cost-effective way to provide an airfoil article having a smooth outer surface, and to provide an aerodynamic surface that is smooth (promoting natural air flow over the surface) over long time causing less drag and thereby reduction of the aircraft fuel consumption is made, which also is environmental friendly.

Suitably, the thickness of the coating is about 0,1 µm to 20 µm, preferably 0,5 to 10 µm.

Preferably, the porosity will be selected so that optimal filling of the hydrophobic material will occur into the pores.

By the method of applying (impregnating) the hydrophobic material directly -or shorly after, such as 2 to 48 hours after the step of providing the pososity, the pores will be filled with the hydrophobic material without any possibilty for moisture to penetrate the surface.

Preferably, the porosity is so selected that absorption of moisture into the outer surface is not possible.

Suitably, the coating which covers the leading edges of an aircraft wing is thicker (and/or denser applied than coatings covering the upper and lower sides of the wing.

Preferably, the thickness of the coating of the sheet metal surface is the highest within areas of the aircraft wing (or other airfoils) which are subject to higher wearing than other areas. Such an exposed area may be the stagnation points of a wing.

Suitably, the thickness of the hydrophobic layer is adapted to erosion protection criteria. I.e., the leading edge of a wing will have a thicker hydrophobic layer than the upper and lower side of the wing. In such way is weight saved due to the use of optimal use of pre-determined thickness of the hydrophobic layer. This is also cost-effective.

Preferably, the metal is Aluminium or titanium.

In such way is achieved that a cost-effective production of the article can be performed at the same time as the airfoil article will be of low weight.

Aluminium being especially suitable to polish to a very smooth surface and therefore it will due to the present invention be possible to provide a sheet metal with an outer surface having an extraordinary smooth surface which also is erosion resistant and at the same time having an anti-/deicing functionality.

Preferably, the coating essentially extends over the entire article outer surface

Suitably, the hydrophobic coating is applied so that the outermost portion of the coating, adjacent the outer surface of the coating (aerodynamic surface), exhibits more dense (packed) material of the hydrophobic coating for reaching an erosion protective outer surface.

Preferably, the coating is excludingly provided over the leading edge of an aircraft wing.

Suitably, the parameters for achieving the hydrophobic coating, such as material comprising wax, are selected from sprayed material temperature, velocity of the material impacting the sheet metal surface, the angle of impact, the porosity of the sheet metal surface and also such parameter as the temperature difference between the temperature of the hydrophobic material applied onto the sheet metal surface, just before impact, and the temperature of the sheet metal material.

The inventor of the present invention has surprisingly noticed that extremely high fill out of the pores with hydrophobic material is achieved, when adjusting the parameters in such way that the hydrophobic material (when applied onto the sheet metal surface) has a colder lower temperature (e.g. 15° C) than the temperature of the sheet metal surface. This is because the air trapped within the cavity of each pore, due to the higher temperature (e.g. 20° C) of the sheet metal surface, will be cold down because the trapped air will come into contact with the just a little cooler hydrophobic material. Also is achieved that no expansions of the sheet metal occur during the application of the hydrophobic material.

Alternatively, the porosity of the sheet metal outer surface is about 5% to 35 %, preferably 12 to 30% for permitting an optimal adherence of the hydrophobic coating in the pores of the sheet metal surface.

This feature in combination with the herein mentioned feature reciting that the temperature difference, between the temperature of the hydrophobic material which being applied and the temperature of the sheet metal surface per se, will promote an optimal adherence and a long life time of the hydrophobic coating to the sheet metal surface.

Suitably, the sheet metal surface is cleaned before the production of porosity and also before the application of hydrophobic material.

Preferably, a finishing step of the sheet metal surface is made after the step of applying the hydrophobic material.

Preferably, the sheet metal surface is subject for roughening (before the production of porosity) for ensuring satisfactory bonding between the coating and the substrate.

Suitably, the application of the hydrophobic material is made by means of a portable applicator so that eventual adjustment of the smoothness of the airfoil outer surface can be made.

Alternatively, the applicator uses a vacuum chamber which is coupled to the airfoil. In such way is achieved a controllable environment surrounding the area to be adjusted.

Suitably, the hydrophobic material exhibits a pre-determined property.

Preferably, the porous outer layer consists of elongated pores extending orthogonally from the outer surface into the sheet metal.

Suitably, the porous outer layer consists of random oriented pores being exposed to the outer surface.

The hydrophobic material comprises wax.

In such way is a production of the inventive article achieved which is cost-effective and time saving.

The means for providing a blank of sheet metal can be an automatic sheet metal forming apparatus. The means for providing a porous outer layer of said sheet metal can be an anodizing apparatus. The means for applying a hydrophobic material onto the sheet metal surface and thereby into said porous outer layer can be an applicator held by a robot arm. The means for applying a hydrophobic material can also include heating means for heating the sheet metal surface (or cooling means for cooling the hydrophobic material to be applied) so that a temperature difference between the hydrophobic material during the application and the sheet metal surface occurs. In such way it will be guaranteed that porous outer layer of the sheet metal surface entirely is impregnated with the hydrophobic material. Finally, the means for finishing the outer surface of the article can be a polishing apparatus held by a robot arm. The inventive solutions achieved by the invention can be taken into account for all claim categories herein disclosed.

### BRIEF DESCRIPTION OF THE DRAWINGS

The present invention will now be described by way of examples with references to the accompanying schematic drawings, of which:
Figs. 1a-1b illustrate surface treatment of an aluminium skin outer surface according to one aspect of the invention;
Fig. 1c illustrates impregnation of a hydrophobic coating in the surface shown in Fig. 1b;
Fig. 2a illustrates one aspect of the invention;
Fig. 2b illustrates one aspect of surface treatment according to the invention;
Figs. 3a to 3b illustrate one aspect of the invention exhibiting orthogonally oriented pores;
Figs. 4a to 4c illustrate one aspect of the invention exhibiting randomly oriented pores;
Fig. 5 illustrates an aircraft comprising a wing skin having an outer surface according to one aspect of the invention;
Figs. 6a to 6c illustrate a part of the wing shown in Fig. 5 during use;
Fig. 7a illustrates a closer view of an outer surface of an airfoil article according to one aspect of the invention;
Fig. 7b illustrates in a side view an outer surface according to prior art;
Figs. 8a to 8e illustrate one aspect of the invention;
Figs. 9a to 9c illustrate flowcharts showing methods according to different aspects of the invention;
Fig. 10a illustrates a production line according to one aspect of the invention; and
Fig. 10b illustrates a computer according to one aspect of the invention.

### DETAILED DESCRIPTION

Hereinafter, embodiments of the present invention will be described in detail with reference to the accompanying drawings, wherein for the sake of clarity and understanding of the invention some details of no importance are deleted from the drawings.

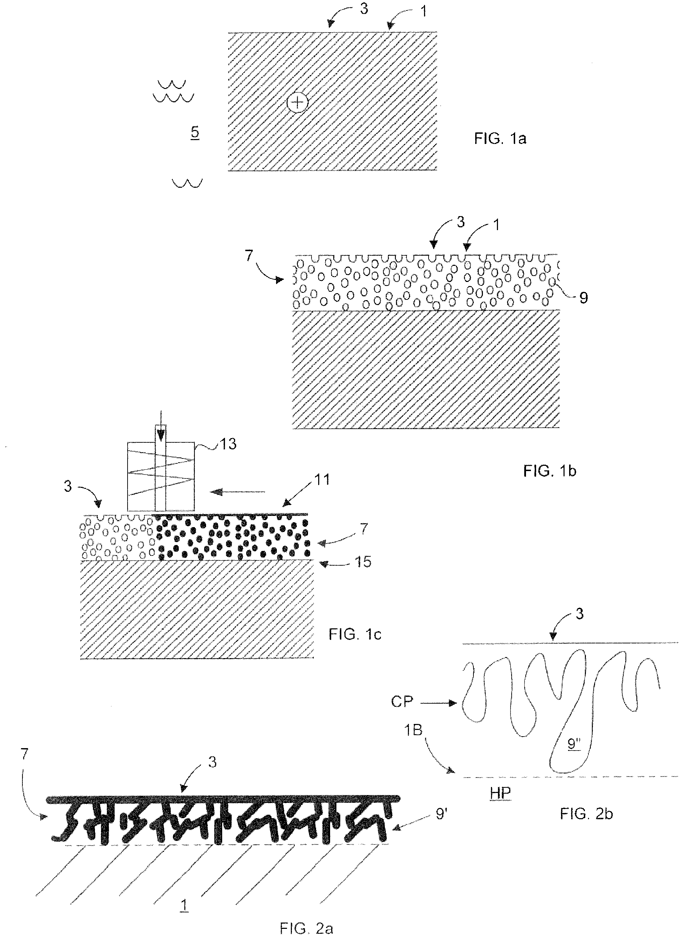

Fig. 1a schematically illustrates surface treatment of an aluminium skin 1. A blank sheet of aluminium has been pre-cleaned and thereafter is provided a stream of abrasive material, such as Aluminium Oxide (not shown) onto the surface 3 (blasting) under high pressure. Thereafter, the surface 3 is cleaned again for removing blast material. In such way is achieved a rough surface of the aluminium skin 1. This surface 3 is thereafter subject to pickling wherein an acid is used in pickling the aluminium sheet for oxidation. Such blasted and oxidized surface will promote the procedure shown in Figs 1a-1b. The aluminium sheet is submerged in a suitable acid bath 5 for making an electrolytic processing (anodising). The electrolytic processing shown in Fig. 1b generates an anodic film 7 grown on the aluminium sheet surface 3 (earlier treated by above-mentioned cleaning and blasting plus pickling) under extremely clean conditions without leaving any traces of impurities on the surface 3, which is important for aircraft industry. A series electrodes (made of stainless steel, low alloy steel, titanium, aluminium etc. dependent of type of electrolyte) (not shown) are provided for the electrolytic process applying appropriate voltage and current. The aluminium sheet acts as anode (positive) terminal and the electrodes act as cathode terminal. The anodic film 7 to be produced can be of about 0,5 to 10 micro meter, preferably 2 to 7 micro meter thickness. As shown in Fig. 1b there is achieved a plurality of pores 9 (cavities), wherein the pore diameters range from about 3 to 60 nano meter, preferably 10 to 40 nano meter, depending upon the process conditions and electrolytes employed. The pores 9 (in this case pore diameter of 10 to 30 nano meter, preferably 15 to 25 nano meter have such pore density that each pore 9 is in communication with the surface 3 (onto which surface 3 a hydrophobic material 11 is to be applied) upper part of the aluminium sheet (shin). Fig. 1c schematically illustrates the application of the hydrophobic material 11 (in this case comprising wax) onto said surface. The application is made by a robot arm moving an applicator nozzle 13 over the surface 3 and the wax penetrates the anodic film 7 from the surface 3 per se. After the application of the wax, excess material is removed by an automatic scrape (not shown) and the robot arm thereafter grip and moves a lint-free cloth (not shown) over the surface 3 for rubbing the wax material on the surface thereby urging the wax into the pores 9 entirely filling the cavities (pores 9) of the anodic film 7. The robot arm furthermore polishes the surface until a smooth and shiny surface 3 is achieved.

Fig. 2a schematically illustrates one aspect of the invention where the pores 9' are randomly oriented and are elongated. Fig. 2b schematically illustrates one aspect of achieved surface structure by a type of surface treatment where the cavities 9" of the metal skin surface 3 extend from the upper part of the surface 3 to an interface 15 between cavity part CP and sheet metal homogenous part HP, so called interface barrier 1B.

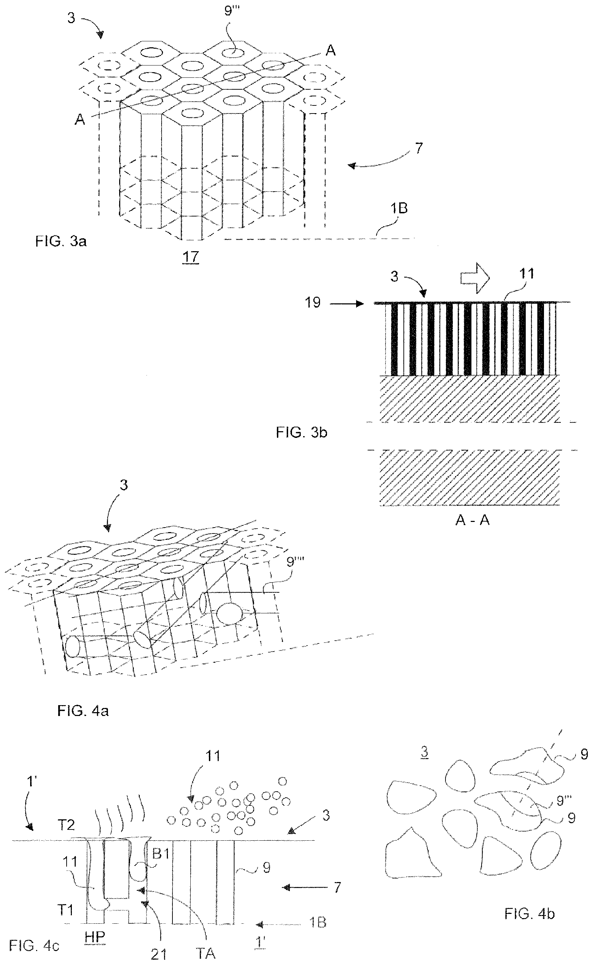

Figs. 3a to 3b schematically illustrate one aspect of the invention exhibiting orthogonally oriented pores 9"'. Fig. 3a illustrates in perspective an anodic film 7 of an aluminium sheet 17, which film 7 is achieved by electrolytic processing. The produced porous surface 3 of the anodic film 7 includes a precise morphology, where sub-micron cells 9'" (pore) extend perpendicularly from said surface 3 in regular array to the interface barrier 1B. The outer form of the cells 9'" is hexagon and the cavity is cylindrical (having a diameter of about 10 to 50 nano meter, preferably 20 to 25 nano meter. Fig. 3b is a cross-section A-A in Fig. 3a. It shows that a material 11 comprising wax has been entirely filled in the cells 9"'. An upper ply 19, comprising wax material 11 being in contact with the wax fully filled in the cells 9"', extends over the sheet metal surface 3. The upper ply 19 is anchored to the wax material 11 embedded in the cells 9'" of the porous surface.

Fig. 4a schematically illustrates in perspective one aspect of the invention where the orthogonally oriented pores being in communication with each other via bridging elongated and essentially parallel with the surface extending pores 9"'. In such way is even more guaranteed that the material comprising wax can reach the entire volume of the pores 9"" and cavities 9"'. Fig. 4b schematically illustrates the surface 3 seen from above and pore 9"" openings. A bridging pore 9"" is shown bringing into communication two adjacent pores 9 of the porous surface 3.

Fig. 4c schematically illustrates a method according to one aspect of the invention wherein the sheet metal 1' is heated to a temperature T1. The heating is made in an oven (not shown) to about 50-70 degrees Celsius. The wax material 11 comprising wax is sprayed onto the surface 3, wherein the sprayed wax material 11 is set to a lower temperature T2 than that of the sheet metal 1'. The material 11 (hydrophobic material) is held colder (for example at room temperature) than the sheet metal 1'. Firstly the wax material 11 enters the pores 9. Thereby is formed a cavity (sealed space 21) formed by the wax and the interface barrier 13 plus the walls/wall of the sealed space 21. The trapped air TA within the sealed space 21 has thus a warmer temperature (due to the warmer sheet metal 1') than the sprayed material comprising wax 11. As the warmer trapped air TA gets colder due to the cooling of the latter (by means of the colder wax 11 material penetrating the pores 9 and influencing the temperature of the trapped air TA) the air in the sealed space will shrink. Such shrink (contraction) of the trapped air TA will provide a suction action wherein the material comprising wax 11 will be sucked all the way to the barrier 1B (interface between non-porous sheet metal 1' and the porous surface 3 or anodic film 7. Thereby is guaranteed that the wax is entirely filling the pores. Thereby is achieved a strong anchorage of the wax surface applied onto the sheet metal, such as aluminium.

This feature in combination with the herein mentioned feature reciting that the temperature difference, between the temperature of the hydrophobic material 11 which being applied and the temperature of the sheet metal 1' surface per se, will promote an optimal adherence and a long life time of the hydrophobic coating to the sheet metal surface 3. Titanium sheet or other sheet metal, such as aluminium sheet, is possible to polish to very smooth surface and therefore it will due to the present invention be possible to provide a sheet metal 1' with an outer surface having an extraordinary smooth aerodynamic surface which also is erosion resistant and at the same time having an anti-/deicing functionality.

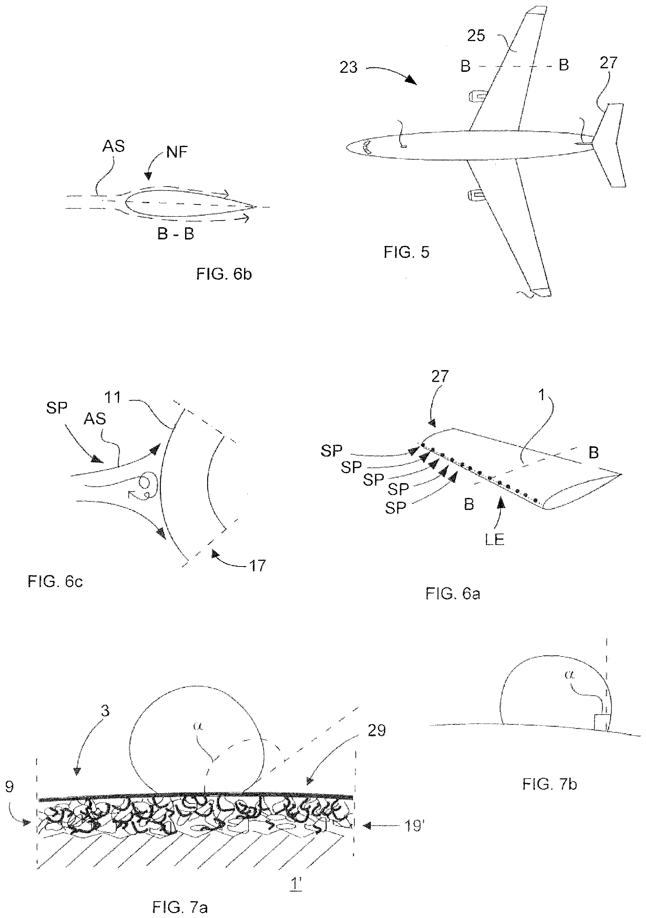

Fig. 5 schematically illustrates an aircraft 23 comprising an aluminium wing skin 25 having an outer surface (the aerodynamic surface adapted to provide natural flow NF of the air stream AS during flight for reducing drag and thereby reducing the aircraft fuel consumption, see Fig. 6b) according to one aspect of the invention. Fig. 6a schematically illustrates a section of the horizontal stabilizer 27 of the aircraft 23 shown in Fig. 5. A leading edge LE of the stabilizer is provided with a wax surface according to one aspect of the invention. At positions of so called stagnations points SP, the erosion is a problem to be solved. At this position will the airstream swirl and the leading edge LE is affected by erosion if not protected. The applied wax layer (surface) at the leading edge LE protects the aluminium skin 1 and the smoothness of the aerodynamic surface will be maintained. A closer schematic view of the stagnation point SP is shown in Fig. 6c. The full impregnation with wax 11 within the porous aluminium surface with micro cavities results in that the wax layer is strongly anchored to the surface of the aluminium skin 17.

Fig. 7a schematically illustrates a closer view of an outer surface 3 of an airfoil article according to one aspect of the invention. The sheet metal 1' of the airfoil comprises an aerodynamic surface 29. The sheet metal 1' is provided with a porous upper layer 19', which layer 19' within its pores 9 is filled with wax. The pores 9 are elongated cavities which are in majority curved for reaching a satisfactory anchorage of the wax to the upper layer 19' of the sheet metal. When rain water hits the airfoil, the water molecules forms an almost spherical water shape as the smooth wax surface, providing an extremely low surface energy, will not permit the water molecules to "fall out". The angle α is about 150 degrees or larger. It is thus achieved so called super hydrophobic surface in an cost-effective way. In Fig. 7b is schematically illustrated in a side view an airfoil aluminium surface according to prior art where the surface has been treated with a hydrophobic material for preventing contact between the surface and the water molecules. However, as the above-mentioned anchorage and strong bond between the skin material and the hydrophobic material is not present, the water tends to adhere to the skin surface and "float out" on the skin surface. The angle α is about 90 degrees.

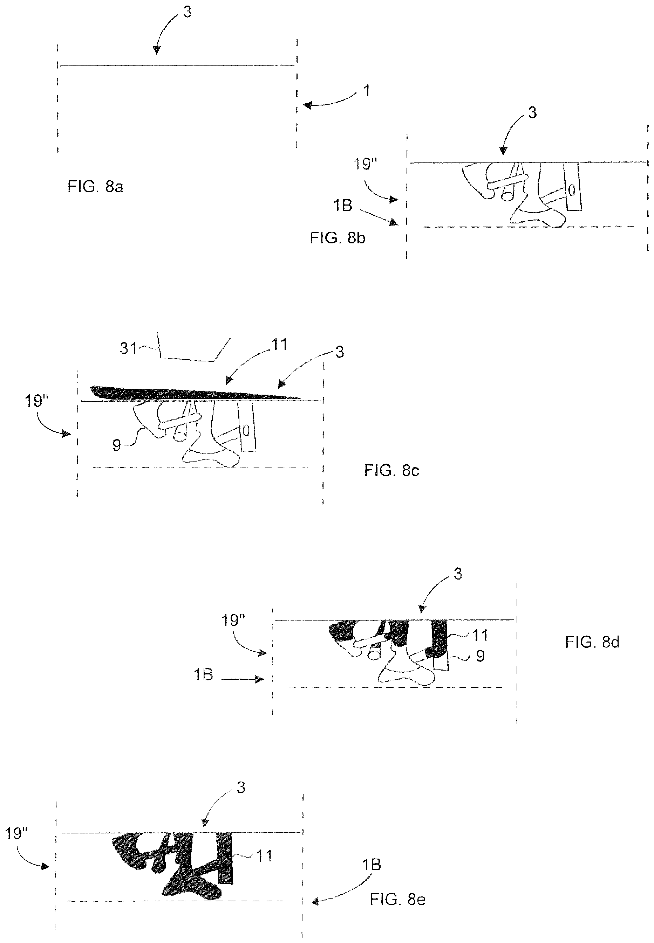

Figs. 8a schematically illustrates a portion of an aluminium sheet 1 upper surface 3 to be used as an aerodynamic surface of an aerial article. Fig. 8b schematically illustrates that a porous upper layer 19" has been provided in the upper surface 3. The average thickness is defined as a distance from the upper surface 3 to a interface barrier 1B between the porous upper layer 19" and the homogenous aluminium sheet 1. Fig. 8c schematically illustrates the application of a wax material 11 by means of a brush 31. Fig. 8d schematically illustrates the impregnation process wherein the wax material 11 being forced into the pores 9 of the porous upper layer 19" by rubbing the surface. Fig. 8e schematically illustrates the state where the wax material fully has filled the pores 9. The wax material 11 is strongly bond and anchored to the aluminium sheet 1 upper surface 3. Thereby is achieved in a cost-effective way a surface treatment procedure on aluminium that gives a hydrophobic (water repellent) surface. Thereby is achieved an airfoil comprising an aerodynamic surface that will repel water and contaminants (e.g. insects) will not adhere. As the surface is water repellent eventual ice adhesion will be low, which implies that less energy has to be used (e.g. electro-mechanical de-icing systems) removing ice from e.g. the leading edge of the airfoil.

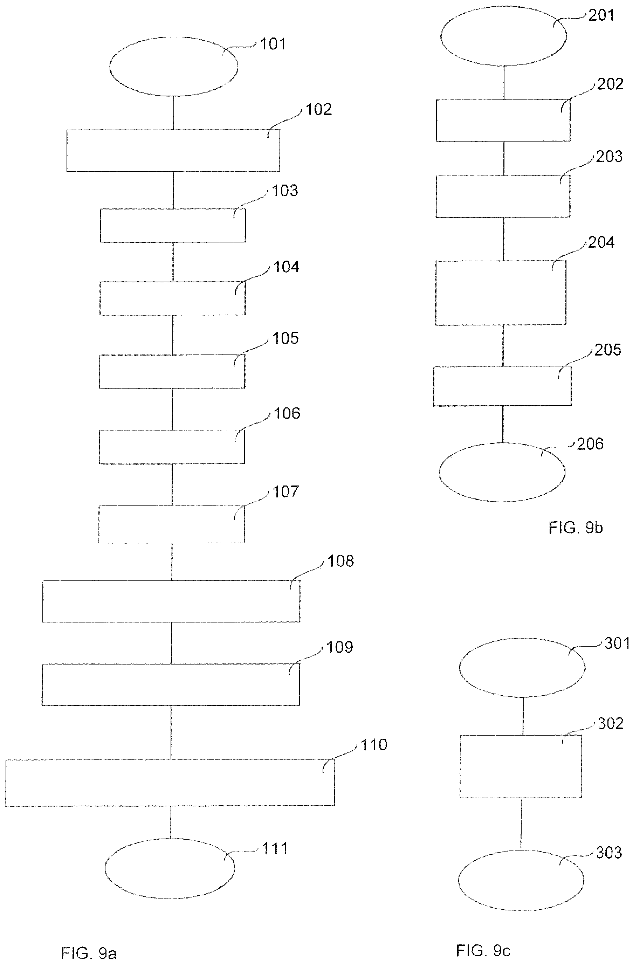

Fig. 9a illustrates a flowchart for a method for producing the airfoil article (such as 25 and 27 in Fig. 5) according to one aspect of the invention. Step 101 corresponds to a starting (start-up) of a production line. Step 102 defines the providing of a blank sheet metal, which in this case is aluminium. The sheet metal is preferably formed to the actual shape corresponding with the curvature of the airfoil skin (aerodynamic surface), before the following steps are made. Thereby is achieved a blank that is to be used in the production of an aircraft 23. The blank is thereafter positioned in position for automatic precleaning in Step 103. Thereafter in Step 104 the blank is positioned in position in the production line for a blasting procedure wherein propelling a stream of abrasive material, in this case Aluminium Oxide (the same material as the blank) is applied onto the surface under high pressure. In next Step 105 the blank is cleaned again so that eventual contamination is removed. Thereafter in Step 106 the blank is brought into position for pickling. The pickling procedure is made for removing eventual impurities by means of submerging the blank in a "pickle liquid" containing strong acid. In Step 107 an anodising procedure is performed. The blank is positioned by means of a robot arm in a bath containing electrolyte acid. The anodising changes the microscopic texture of the upper surface of the blank and changes the crystal structure of the aluminium in the porous upper surface. This texture can be determined from specifik use and from which position the airfoil article will have. For example, at a leading edge, the texture can be denser. An upper skin of a wing within the area extending from one third of chord wise direction to half the distance seen in chord wise direction, seen from the leading edge, can be provided with less dense texture.

There is thus a possibiliy to contol the texture thickness from the type of anodizing. For example, by the application of sulphuric acid anodization the thickness of the texture easy can be controlled. Also, the structure per se is possible to determine from desired parameters by just choosing the proper type of anodization.

There is also a alternative to provide different types of anodizing for different positions of the aerodynamic surface for achieving different smoothness.

Thereafter in Step 108 the blank is positioned into position for pre-heating. The temperature to be reached can be 40-60 degrees Celsius. In a next Step 109 a hydrophobic material is applied and excess hydrophobic material is removed and the surface is polished by an automatic or semi-automatic polishing apparatus in Step 110. In Step 111 the finished article is wrapped for protection and transported to a storage facility, defining a stop (for said article per se) in the production line. Alternatively, the finished article can be transported direct to a work-shop for mounting the article 25 to a sub-structure.

Fig. 9b illustrates a flowchart for a method in a hermetically sealed production line for producing the airfoil article according to one aspect of the invention. Step 201 corresponds to a starting (start-up) of the production line. Step 202 defines the providing of a blank sheet metal.

Thereafter in Step 203 the blank is subject for plasma electrolytic oxidation for providing surface porosity. In Step 204 the hydrophobic material is applied. The surface is rubbed in Step 205 and in Step 206 the procedure is finished. The procedure in Fig. 9b is performed automatically and the blank is protected from contaminations in entire production line and finally wrapped for storage and transportation.

Fig. 9c illustrates a flow chart of the method according to one aspect o the invention. The method starts in a Step 301. In Step 302 is provided method for manufacture of an aerial article adapted to be mountable on a sub-structure of an aerial vehicle (the article comprises an outer surface serving as an aerodynamic surface during use of the article). In Step 303 the method is fulfilled and stopped. The step 302 thus comprises the steps of; providing a blank of sheet metal; providing a porous outer layer of said sheet metal; applying a hydrophobic material 11 into said porous outer layer in such way that the thickness of the porous outer layer entirely is impregnated with the hydrophobic material; and finishing the outer surface of the article.

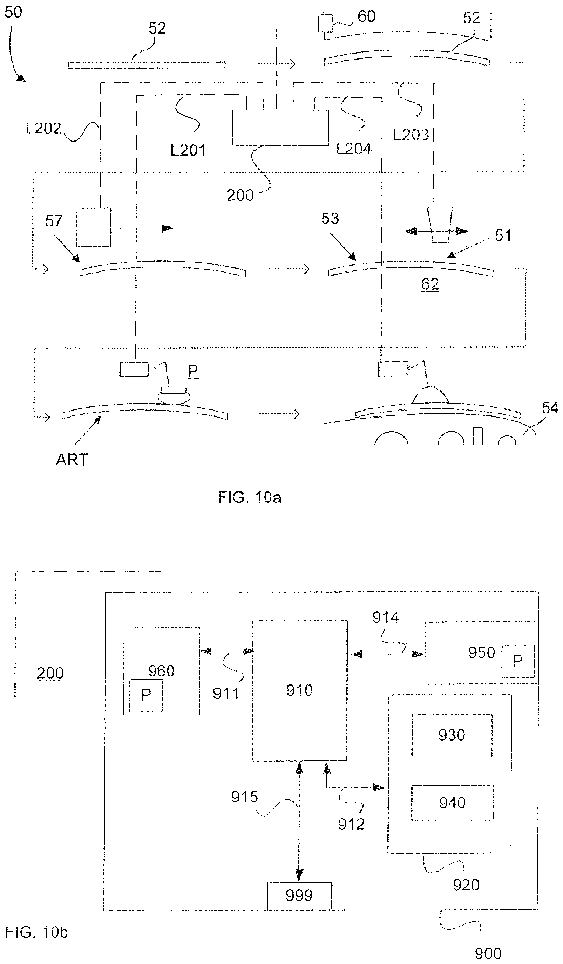

Fig. 10a schematically illustrates a production line 50 according to one aspect of the invention. A control unit 200 is adapted to control the manufacture steps performed by the production line. The control unit 200 is maneuvered by an operator (not shown). The production line 50 is arranged to perform the manufacture steps of providing a blank 52 of sheet metal to the production line 50; forming the blank 52 of sheet metal to a desired curvature; providing a porous outer layer 57 of said blank of sheet metal; applying a hydrophobic material 51 into said porous outer layer 57 in such way that the thickness of the porous outer layer 57 entirely being impregnated with the hydrophobic material; finishing the outer surface of the article and storing the finished article alternatively mounting the article to a sub-structure, such as a arrangement of wing ribs 54. In Fig. 10a is shown that the control unit 200 controls a forming tool 60 for forming the blank 52 after automatic positioning of the blank 52 in the tool. Thereafter the control unit 200 controls and automatically moves the blank 52 to a position where the upper surface of the blank 52 is provided with a porous surface layer 57. Thereafter the control unit moves the blank 52 to an applicator station 62 where a hydrophobic material 51 is applied to the porous surface 53 of the blank. When the finished article ART has been polished P it reaches the last position of the production line 50 and is wrapped for protecting the article ready for transport to an aircraft assembly.

Fig. 10b illustrates a device 900 (such as a computer) according to one aspect of the invention. The control unit 200 of the production line described in Fig. 10a can preferably comprise the device 900. The device 900 comprises a non-volatile memory NVM 920 which is a computer memory that can retain stored information even when the computer is not powered. The device 900 further comprises a processing unit 910 and a read/write memory 950. The NVM 920 comprises a first memory unit 930. A computer program (which can be of any type suitable for any operational data base) is stored in the first memory unit 930 for controlling the functionality of the device 900 as a part of e.g. the production line in Fig. 10a.

Furthermore, the device 900 comprises a bus controller (not shown), a serial communication port (not shown) providing a physical interface through which information transfers separately in two directions. The device 900 also comprises any suitable type of I/O module (not shown) providing input/output signal transfer, an A/D converter (not shown) for converting continuously varying signals from detectors (not shown) and other monitoring units (not shown) of the production line into binary code suitable for the computer.

The device 900 also comprises an input/output unit (not shown) for adaption to time and date. The device 900 also comprises an event counter (not shown) for counting the number of event multiples that occur from independent events in the production line. Furthermore the device 900 includes interrupt units (not shown) associated with the computer for providing a multitasking performance and real time computing in said production line. The NVM 920 also includes a second memory unit 940 for external controlled operation.

A data medium storing program P comprising driver routines adapted for drivers (not shown) and provided for operating the device 900 for performing the present method described herein. The data medium storing program P comprises routines for causing in a production line an automatic or semi-automatic manufacture of an aerial sheet metal article. The data medium storing program P comprises a program code stored on a medium, which is readable on the computer, for causing the control unit 200 to perform the method steps of providing a blank of sheet metal; providing a porous outer layer of said sheet metal; applying a hydrophobic material into said porous outer layer in such way that the thickness of the porous outer layer entirely is impregnated with the hydrophobic material; and finishing the outer surface of the article.

The data medium storing program P further may be stored in a separate memory 960 and/or in a read/write memory 950. The data medium storing program P is in this embodiment stored in executable or compressed data format.

It is to be understood that when the processing unit 910 is described to execute a specific function this involves that the processing unit 910 executes a certain part of the program stored in the separate memory 960 or a certain part of the program stored in the read/write memory 950.

The processing unit 910 is associated with a data port 999 for communication via a first data bus 915. The non-volatile memory NVM 920 is adapted for communication with the processing unit 910 via a second data bus 912. The separate memory 960 is adapted for communication with the processing unit 910 via a third data bus 911. The read/write memory 950 is adapted to communicate with the processing unit 910 via a fourth data bus 914. The data port 999 is preferably connectable to e.g. data links L201, L202, L203, L204 of the production line shown in Fig. 10a.

When data is received by the data port 999, the data will be stored temporary in the second memory unit 940. After that the received data is temporary stored, the processing unit 910 will be ready to execute the program code, according to the above-mentioned procedure. Preferably, the signals (received by the data port 999) comprise information about operational status of the production line, such as operational status regarding the anodising apparatus and parameters of the electrolytic bath for producing the proper porosity of the sheet metal upper layer. It could also be operational data regarding the application of the hydrophobic material onto the sheet metal. According to one aspect signals received by the data port 999 may contain information about actual smoothness of the upper surface of the sheet metal provided by a sensor means (not shown). The received signals at the data port 999 can be used by the device 900 for controlling and monitoring a semi-automatic or automatic production line for manufacture of erosion resistant smooth aerial metal articles in a cost-effective way. The signals received by the data port 999 can be used for automatically moving the sheet metal between the different operation positions in the production line by means of robot arms. The information is preferably measured by means of suitable sensor members arranged in each automatic apparatus of the production line. The information can also be manually fed to the control unit 200 via a suitable communication device, such as a personal computer display.

Parts of the methods can also be executed by the device 900 by means of the processing unit 910, which processing unit 910 runs the data medium storing program P being stored in the separate memory 960 or the read/write memory 950. When the device 900 runs the data medium storing program P, the method steps disclosed herein will be executed.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims.

## Claims

1. A method for manufacture of a metal sheet article (ART) for a fixed wing aircraft (23), the metal sheet article comprises an outer surface (3) serving as an aerodynamic surface during use of the article, the method comprises the steps of:
- providing a blank (52) of said metal sheet (1, 1');
- providing a porous outer layer (7, 7") of said metal sheet; **wherein** the step is performed by anodizing under pre-determined parameters;
- pre-heating the metal sheet (1, 1') so that the outer layer is warmer than a hydrophobic material (11);
- applying the hydrophobic material (11) comprising wax (11) by spraying a wax based aerosol spray onto said porous outer layer and applying said hydrophobic material (11) into said porous outer layer (7, 7") by rubbing the surface such that the thickness of the porous outer layer (7, 7") is entirely impregnated with the hydrophobic material (11); and
- finishing the outer surface (3) of the article.

2. The method of claim 1, wherein the method also comprises the step of:
- before providing the porous outer layer (7, 7"), blasting the surface (3) to be treated.

3. The method of claim 1 or 2, wherein the method also comprises the step of:
- before providing the porous outer layer (7, 7"), pickling the surface (3) to be treated.

## Patentansprüche

1. Verfahren zur Herstellung eines Metallblechartikels (ART) für ein Starrflügelflugzeug (23), wobei der Metallblechartikel eine Außenfläche (3) umfasst, die während der Verwendung des Artikels als eine aerodynamische Oberfläche dient, welches Verfahren die folgenden Schritte umfasst:
- Bereitstellen eines Rohlings (52) des Metallblechs (1, 1');
- Bereitstellen einer porösen Außenschicht (7, 7") des Metallblechs; **wobei** der Schritt durch Anodisieren unter vorgegebenen Parametern durchgeführt wird;
- Vorwärmen des Metallblechs (1, 1'), so dass die Außenschicht wärmer als ein hydrophobes Material (11) ist;
- Aufbringen des ein Wachs (11) umfassenden hydrophoben Materials (11) durch Sprühen eines auf Wachs basierenden Aerosolsprühmittels auf die poröse Außenschicht und Einsetzen des hydrophoben Materials (11) in die poröse Außenschicht (7, 7") durch Reiben der Oberfläche derart, dass die Dicke der porösen Außenschicht (7, 7") vollständig mit dem hydrophoben Material (11) imprägniert wird; und
- Endfertigung der Außenfläche (3) des Artikels.

2. Verfahren nach Anspruch 1, wobei das Verfahren weiter den folgenden Schritt umfasst:
- vor dem Bereitstellen der porösen Außenschicht (7, 7"), Strahlen der zu behandelnden Oberfläche (3).

3. Verfahren nach Anspruch 1 oder 2, wobei das Verfahren weiter den folgenden Schritt umfasst:
- vor dem Bereitstellen der porösen Außenschicht (7, 7"), Beizen der zu behandelnden Oberfläche (3).

## Revendications

1. Procédé de fabrication d'un article de tôle (ART) pour un véhicule aérien à ailes fixes (23), l'article de tôle comprenant une surface extérieure (3) servant de surface aérodynamique lors de l'utilisation de l'article, le procédé comprend les étapes consistant à :
- fournir une ébauche (52) de ladite tôle (1, 1') ;
- fournir une couche externe poreuse (7, 7") de ladite tôle ; **dans lequel** l'étape est effectuée par l'anodisation sous des paramètres prédéterminés ;
- préchauffer la tôle (1, 1') si bien que la couche externe est plus chaude que le matériau hydrophobe (11) ;
- appliquer le matériau hydrophobe (11) comprenant du cire (11) en pulvérisant un spray aérosol à base de cire sur ladite couche externe poreuse et appliquer ledit matériau hydrophobe (11) dans ladite couche externe poreuse (7, 7") en frottant la surface si bien que l'épaisseur de la couche externe poreuse (7, 7") est entièrement imprégnée avec le matériau hydrophobe (11) ; et
- finir la surface extérieure (3) de l'article.

2. Procédé selon la revendication 1, dans lequel le procédé comprend également l'étape de :
- avant de fournir la couche externe poreuse (7, 7"), le grenaillage de la surface (3) à traiter.

3. Procédé selon la revendication 1 ou 2, dans lequel le procédé comprend également l'étape de :
- avant de fournir la couche externe poreuse (7, 7"), le décapage de la surface (3) à traiter.
